# EUROPÄISCHE PATENTSCHRIFT

(11) **EP 2 025 979 B1**
(45) Veröffentlichungstag und Bekanntmachung des Hinweises auf die Patenterteilung: **27.02.2013**
(21) Anmeldenummer: 08160587.5
(22) Anmeldetag: 17.07.2008
(51) Int. Cl.: F16K 11/074

(54) **Rotationsverdünner für Fluidströme**
Rotation thinners for fluid flows
Diluant par rotation pour flux fluidiques

(30) Priorität: 16.08.2007 AT 4912007 U
(43) Veröffentlichungstag der Anmeldung: 18.02.2009
(73) Patentinhaber: AVL List GmbH, 8020 Graz (AT)
(72) Erfinder: Bergmann, Alexander, 8052 Graz (AT); Pongratz, Helmut, 8045 Graz (AT)
(74) Vertreter: Pinter, Rudolf

(56) Entgegenhaltungen:
- US-A- 3 476 518
- US-A- 3 964 513
- US-A- 5 650 577

## Beschreibung

Die Erfindung betrifft einen Rotationsverdünner für Fluidströme, mit einem drehbaren Rotationselement, welches oberflächlich zugängliche diskrete Transfervolumina aufweist, die entlang ihrer gemeinsamen Bewegungsbahn abwechselnd über Zu- und Ableitöffnungen für den unverdünnten Fluidstrom einerseits und einen Verdünnungs-Fluidstrom andererseits streichen.

Derartige, auch Karussell-Verdünner genannte Anordnungen sind beispielsweise aus "Journal of Aerosol Science, 1997, Vol. 28, Nr. 6, Seiten 1049 bis 1055" bekannt und werden meist für Messungen an flüssigen oder gasförmigen Fluidströmen und speziell dann verwendet, wenn zur besseren Ausnützung eingeschränkter Messbereiche der Messgeräte definierte Vorverdünnungen in einem möglichst großen Verdünnungsratenbereich erforderlich sind. Ein Basisblock der aus der genannten Literaturstelle bekannten Anordnung weist zwei Anschlusskanäle auf; einen für den unverdünnten Fluidstrom (dort ein aerosolbeladenes Gas) und den anderen für einen aerosolfreien Verdünnungs-Fluidstrom. Beide Kanäle haben Zuund Ableitöffnungen auf der gleichen Außenfläche des Basisblocks und werden von dem über einen Schrittmotor angetriebenen Rotationselement abgedeckt, welches zur Verringerung der Reibung aus Synthetikmaterial mit entsprechenden Zusätzen besteht. Die im Rotationselement auf der den Zu- und Ableitöffnungen zugewandten Seite angeordneten Transfervolumina streichen bei der Drehung des Rotationselementes über die Öffnungen und werden damit mit einem kontrollierbaren Teil des aerosolbeladenen Fluidstromes gefüllt, der an den entsprechenden Öffnungen für den Verdünnungs-Fluidstrom dann von diesem wieder mitgenommen wird. Das Verdünnungsverhältnis ist damit eine Funktion von Anzahl und Volumen der diskreten Transfervolumina sowie auch des Verdünnungs-Fluidvolumenstromes und der Drehgeschwindigkeit des Rotationselementes.

In einer konstruktiv etwas anders ausgeführten Anordnung der eingangs genannten Art ist anstatt eines einseitig mit Kavitäten versehenen Rotationselementes eine Lochscheibe vorgesehen, deren durchgehende Transfervolumina in Durchflussrichtung von der Zu- zur Ableitöffnung gefüllt bzw. entleert werden. Der zugeführte aerosolbeladene Fluidstrom wird nach dem Rotationselement in einem Filter komplett vom Aerosol befreit und dann als Verdünnungs-Fluidstrom der anderen Seite des Rotationselementes zugeführt. Wenn das Rotationselement steht, wird kein aerosolbeladenes Teilvolumen abgezweigt und auf der anderen Seite zugeführt, sodass kein Aerosol in dem dem Messgerät zugeführten Fluidstrom verbleibt. Wenn das Rotationselement sich dreht, wird wiederum ein gewisser Anteil aus dem aerosolbeladenen Fluidstrom dem partikelfreien Verdünnungs-Fluidstrom zugefügt, womit die Verdünnungsrate wiederum über die gleichen Parameter wie oben genannt variierbar ist.

Nachteilig ist bei den bekannten Anordnungen der eingangs genannten Art, dass der einstellbare Verdünnungsratenbereich relativ eng begrenzt ist und nur mittels konstruktiver Änderungen der zusammenwirkenden Elemente nach oben oder unten verschoben, aber auch dann kaum ausgeweitet werden kann.

Dokument US 5,650,577 offenbart eine Anordnung zur Probeentnahme.

Aufgabe der vorliegenden Erfindung ist es, einen Rotationsverdünner der eingangs genannten Art so zu verbessern, dass die erwähnten Nachteile der bekannten Anordnungen vermieden werden und dass insbesonders auf einfache Weise eine signifikante Vergrößerung des nutzbaren Verdünnungsratenbereiches möglich wird.

Diese Aufgabe wird gemäß der vorliegenden Erfindung bei einem Rotationsverdünner der eingangs genannten Art dadurch gelöst, dass das Rotationselement zumindest zwei Reihen von Transfervolumina auf unterschiedlichen Bewegungsbahnen aufweist, deren zugehörige Zuleitöffnungen für den unverdünnten Fluidstrom und/oder den Verdünnungs-Fluidstrom separat ansteuerbar sind. Damit kann auf sehr einfache Weise der Verdünnungsratenbereich durch Kombination der verschiedenen Möglichkeiten der Ansteuerung der unterschiedlichen Reihen von Transfervolumina erhöht werden (nur eine Reihe, mehrere Reihen gemeinsam oder alle Reihen gemeinsam).

Die Transfervolumina in jeder Reihe sind in weiterer Ausgestaltung der Erfindung vorzugsweise für sich gleich groß und in den einzelnen separaten Reihen unterschiedlich groß, womit bei Kombination der Ansteuerungsmöglichkeiten der einzelnen Reihen eine Verbesserung der Abstufungsmöglichkeit der erzielbaren Verdünnungsraten leicht möglich ist.

Die Anzahl an Transfervolumina kann in den einzelnen Reihen auch unterschiedlich sein, was ebenfalls weitere Einflussnahmen auf die erzielbaren Verdünnungsraten ermöglicht.

Der Volumenstrom des Verdünnungs-Fluidstromes ist in weiterer Ausgestaltung der Erfindung über einen vorgeschalteten Massenstromregler einstellbar, was zusätzlich eine Ausweitung des nutzbaren Verdünnungsratenbereiches ermöglicht.

In besonders bevorzugter weiterer Ausgestaltung der Erfindung weist das Rotationselement zumindest zwei in Fluidstromrichtung hintereinander geschaltete, separat drehbare Teilelemente mit separaten Reihen von Transfervolumina und zugehörigen Zu- und Ableitöffnungen auf, womit der nutzbare Verdünnungsratenbereich weiter gesteigert wird.

Das drehbare Rotationselement und/oder die Zu- und Ableitungskanäle zu bzw. von den Zu- und Ableitöffnungen können in weiterer Ausgestaltung der Erfindung mittels Heizelementen, vorzugsweise internen elektrischen Heizpatronen, thermostatisiert sein, was Anlagerungen von Bestandteilen des Fluidstromes und insbesonders der mit diesem transportierten Aerosole verhindert oder zumindest stark verringert.

Die Erfindung wird im folgenden an Hand der in den Zeichnungen dargestellten Ausführungsbeispiele näher erläutert.

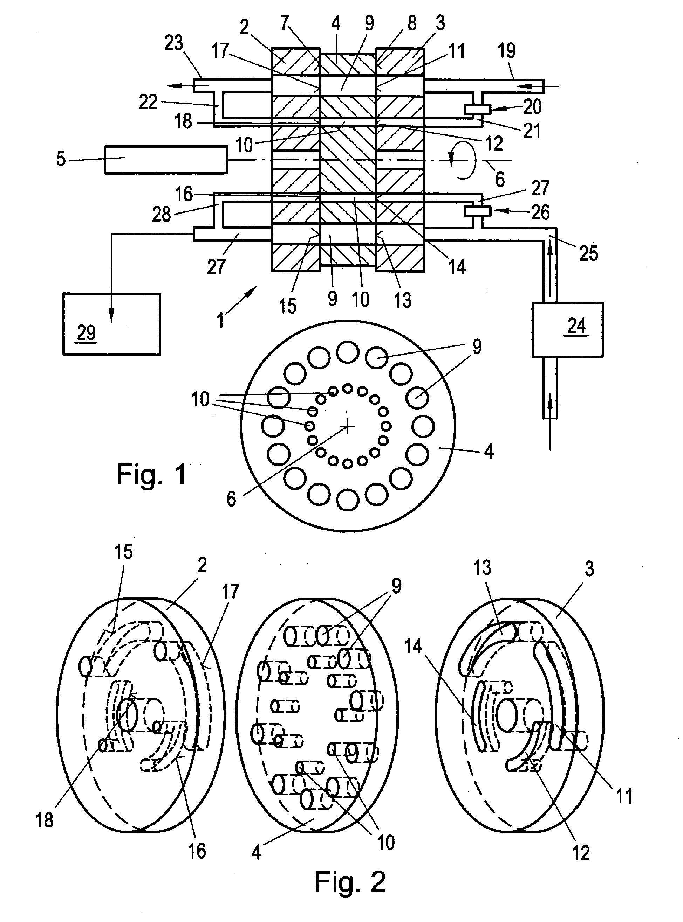

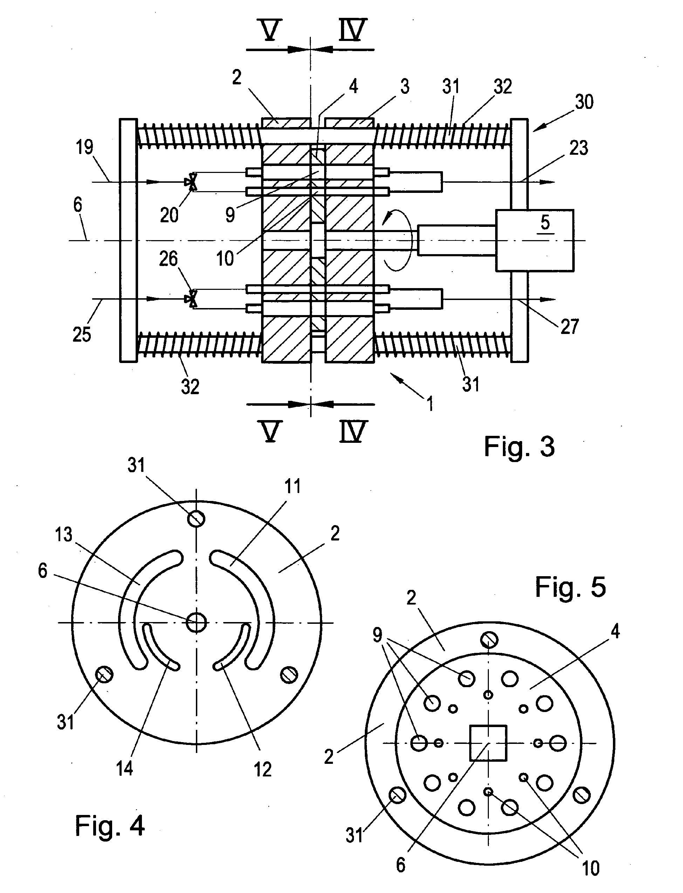

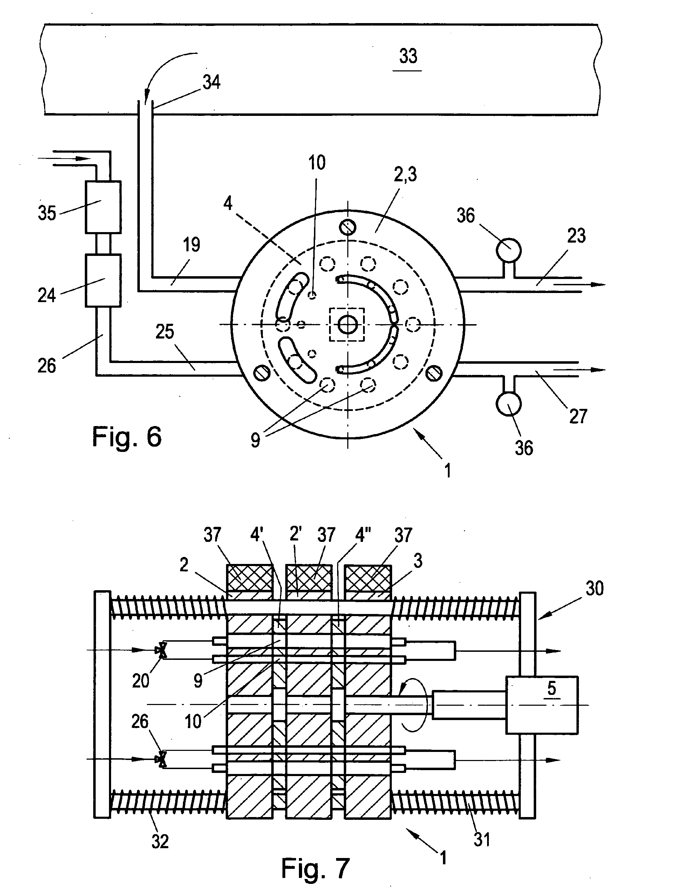

Fig. 1 zeigt einen schematischen Querschnitt durch einen erfindungsgemäßen Rotationsverdünner eingebaut in einem Aerosolmesssystem, Fig. 2 ein konkretes Ausführungsbeispiel für die in Fig. 1 schraffiert dargestellten wesentlichen Bauteile eines erfindungsgemäßen Rotationsverdünners in perspektivischer Explosionsdarstellung, Fig. 3 ein weiteres teilweise schematisch dargestelltes Ausführungsbeispiel für einen erfindungsgemäßen Rotationsverdünner, Fig. 4 eine Schnittansicht entlang der Pfeile IV, IV in Fig. 3, Fig. 5 eine Ansicht entlang der Pfeile V, V in Fig. 3 auf das Rotationselement der Anordnung nach Fig. 3 alleine, Fig. 6 einen beispielsweise nach den Fig. 3 bis 5 ausgebildeten Rotationsverdünner angeordnet in einem Partikelmesssystem und Fig. 7 ein weiteres Ausführungsbeispiel für einen erfindungsgemäßen Rotationsverdünner.

Der Rotationsverdünner 1 nach Fig. 1 weist zwischen zwei Stationärelementen 2, 3 ein drehbares Rotationselement 4 auf, welches mittels eines Schrittmotors 5 um seine Achse 6 drehbar ist und mit von beiden Seiten 7, 8 oberflächlich zugänglichen, diskreten Transfervolumina 9, 10 versehen ist. Wie insbesonders auch aus der in Fig. 1 unten separat dargestellten seitlichen Draufsicht auf das Rotationselement 4 (in Richtung der Achse 6) zu sehen ist, sind hier zwei separate Reihen von Transfervolumina (9 einerseits und 10 andererseits) vorgesehen, die bei Drehung des Rotationselementes 4 um seine Achse 6 auf zwei unterschiedlichen Bewegungsbahnen jeweils abwechselnd über Zu- und Ableitöffnungen 11 bis 18 in den mit dem Rotationselement 4 abdichtend zusammenwirkenden Seiten 7, 8 der Stationärelemente 2, 3 streichen.

Über eine Leitung 19 wird ein unverdünnter Fluidstrom (gasförmig oder auch flüssig, beispielsweise partikelbeladenes Abgas einer Brennkraftmaschine) zugeführt. Mittels eines Schaltventiles 20 in einer abzweigenden Leitung 21 kann der über die Leitung 19 zugeführte Fluidstrom wahlweise nur der Zuleitöffnung 11 oder aber beiden Zuleitöffnungen 11 und 12 zugeführt werden. Davon abgesehen könnte aber auch vorgesehen werden, in die Leitungen zu beiden Zuleitöffnungen 11, 12 separat ansteuerbare Schaltventile 20 einzusetzen, womit dann bedarfsweise auch nur über die Leitung 21 die Zuleitöffnung 12 ansteuerbar wäre. Auf der der Leitung 19 gegenüberliegenden Seite des Rotationsverdünners 1 führen die Ableitöffnungen 17, 18 über Leitungen 22, 23 zu einem nicht weiter dargestellten Auslass für den Fluidstrom.

Über einen vorgeschalteten Massenstromregler 24 und eine Leitung 25 wird auf der in der Darstellung nach Fig. 1 unteren Seite ein regelbarer Verdünnungs-Fluidstrom zugeführt, der mittels eines Schaltventiles 26 steuerbar der Zuleitöffnung 13 oder den beiden Zuleitöffnungen 13, 14 (über die abzweigenden Leitung 27) zuführbar ist. Auf der gegenüberliegenden Seite des Rotationsverdünners 1 sind wiederum ausgehend von den Ableitöffnungen 15, 16 Leitungen 27, 28 vorgesehen, die den verdünnten Fluidstrom beispielsweise einem Aerosolmessgerät 29 zuführen.

Aus Fig. 2 ist ersichtlich, dass die Zu- und Ableitöffnungen 11 bis 18 in der Praxis sich über einen gewissen Umfangswinkelbereich erstrecken, sodass stets mehrere der diskreten Transfervolumina 9 bzw. 10 überdeckt sind, was eine bessere Füllung bzw. Entleerung der Transfervolumina 9, 10 während ihrer Drehbewegung sicherstellt.

Wenn das Rotationselement 4 gemäß den Fig. 1 und 2 zwischen den Stationärelementen 2, 3 (ohne Drehung um die Achse 6) still steht, gelangt der über die Leitung 19 zugeführte Fluidstrom durch die Zuleitöffnungen 11 bzw. 11 und 12, die jeweils überdeckten Transfervolumina 9, 10, die Ableitöffnungen 17, 18 und die Leitung 23 unverändert durch den Rotationsverdünner 1, sodass der über die Leitung 25 zugeführte Verdünnungs-Fluidstrom auch ohne jede Beimischung unverändert zum Aerosolmessgerät 29 gelangt. Wenn das Rotationselement 4 sich dreht, wird ein gewisser Anteil aus dem über die Leitung 19 zugeführten beispielsweise aerosolbeladenen Fluidstrom dem an sich partikelfreien Verdünnungs-Fluidstrom zugefügt, womit das Verdünnungsverhältnis eine Funktion von Anzahl und Volumen der diskreten Transfervolumina 9, 10 sowie auch des Verdünnungs-Fluidvolumenstromes und der Drehgeschwindigkeit des Rotationselementes 4 ist. Nachdem die Zuleitöffnungen 11, 12 für den unverdünnten Fluidstrom und 13, 14 für den Verdünnungs-Fluidstrom separat ansteuerbar sind, kann auf sehr einfache Weise der Verdünnungsratenbereich durch Kombination der verschiedenen Möglichkeiten der Ansteuerung der unterschiedlichen Reihen von Transfervolumina 9, 10 erhöht werden (nur eine Reihe, beide bzw. mehrere Reihen gemeinsam oder alle Reihen gemeinsam ...).

Die Transfervolumina 9, 10 in jeder Reihe sind hier für sich gleich groß und in den beiden dargestellten einzelnen separaten Reihen unterschiedlich groß. Davon abgesehen könnten auch die Anzahl der Transfervolumina in den einzelnen Reihen unterschiedlich sein, was auch bei gleich großen Transfervolumina unterschiedliche Verdünnungsraten ermöglichen würde.

Bei der Anordnung nach Fig. 3 bis 5 sind von der Funktion her der Anordnung nach den Fig. 1 und 2 entsprechende Teile mit gleichen Bezugszeichen bezeichnet. Abgesehen von den bereits zu Fig. 1 und 2 besprochenen Elementen und deren Funktionsweise ist hier noch zusätzlich auf einen den Schrittmotor 5 tragenden Gehäuserahmen 30 zu verweisen, der über drei Verbindungssäulen 31 und daran geführte Federn 32 die Stationärelemente 2, 3 von beiden Seiten gegen das dazwischen angeordnete Rotationselement 4 drückt. Die hier auf der linken Seite dargestellten eingangsseitigen Schaltventile 20, 26 ermöglichen eine wahlweise oder gleichzeitige Beaufschlagung der großen Transfervolumina 9 und/oder der kleinen Transfervolumina 10.

In Fig. 6 ist der Rotationsverdünner 1 aus den Fig. 3 bis 5 in seiner Zusammenwirkung mit der Eingangsseite eines Aerosolmessgerätes dargestellt. Aus der Abgasleitung 33 einer Brennkraftmaschine wird mittels einer Sonde 34 partikelbeladenes Abgas entnommen und über die hier wiederum mit 19 bezeichnete Leitung dem Rotationsverdünner 1 zugeführt. Partikelfreie Verdünnungsluft strömt über die Leitung 26, die einen Filter 35 sowie den Massenstromregler 24 enthält, dem Rotationsverdünner 1 über die Leitung 25 zu. Über die Leitung 23 strömt Abgas und über die Leitung 27 verdünntes, aerosolbeladenes Abgas aus. Zusätzlich sind hier in den beiden Leitungen 23 und 27 noch Drucksensoren 36 angeordnet, um über die allgemeine Gasgleichung die Volumina auf Massenäquivalente umrechnen zu können, die zur korrekten Berechnung der Verdünnungsrate bei Verwendung von Massenflussreglern für den Verdünnungsfluidvolumenstrom erforderlich sind. Temperatureinflüsse können dabei durch die in Fig. 7 dargestellte Thermostatisierung der Verdünnerscheiben berücksichtigt werden.

Beim Rotationsverdünner 1 nach Fig. 7 weist das Rotationselement zwei in Fluidstromrichtung hintereinander geschaltete, separat drehbare Teilelemente 4', 4" mit separaten Reihen von Transfervolumina 9, 10 und zugehörigen Zu- und Ableitöffnungen 11 bis 18 in drei Stationärelementen 2, 2', 3 auf, was eine zusätzliche Vergrößerung des nutzbaren Verdünnungsratenbereiches ermöglicht.

Zusätzlich ist in Fig. 7 auch die Möglichkeit einer Beheizung der Stationärelemente 2, 2' und 3 über Heizelemente 37 angedeutet, womit die Zu- und Ableitungskanäle zu bzw. von den Zu- und Ableitöffnungen 11 bis 18 thermostatisierbar sind, was auch die Anlagerung beispielsweise von Aerosolen verhindert.

## Patentansprüche

1. Rotationsverdünner (1) für Fluidströme, mit einem umlaufend rotierbaren Rotationselement (4), welches oberflächlich zugängliche diskrete Transfervolumina (9, 10) aufweist, die entlang ihrer gemeinsamen Bewegungsbahn abwechselnd über über stets mehrere aufeinanderfolgende diskrete Transfervolumina überdeckende Zu- und Ableitöffnungen (11 - 18) für den unverdünnten Fluidstrom einerseits und einen Verdünnungs-Fluidstrom andererseits streichen, wobei das Rotationselement (4) zumindest zwei Reihen von Transfervolumina (9, 10) auf unterschiedlichen Bewegungsbahnen aufweist, deren zugehörige Zuleitöffnungen (11 - 14) für den unverdünnten Fluidstrom und/oder den Verdünnungs-Fluidstrom separat ansteuerbar sind.

2. Rotationsverdünner nach Anspruch 1, **dadurch gekennzeichnet, dass** die Transfervolumina (9, 10) in jeder Reihe für sich gleich groß und in den einzelnen separaten Reihen vorzugsweise unterschiedlich groß sind.

3. Rotationsverdünner nach Anspruch 1 oder 2, **dadurch gekennzeichnet, dass** die Anzahl an Transfervolumina (9, 10) in den einzelnen Reihen unterschiedlich ist.

4. Rotationsverdünner nach einem der Ansprüche 1 bis 3, **dadurch gekennzeichnet, dass** der Volumenstrom des Verdünnungs-Fluidstromes über einen vorgeschalteten Massenstromregler (24) einstellbar ist.

5. Rotationsverdünner nach einem oder mehreren der Ansprüche 1 bis 4, **dadurch gekennzeichnet, dass** das Rotationselement (4) zumindest zwei in Fluidstromrichtung hintereinandergeschaltete, separat drehbare Teilelemente (4', 4") mit separaten Reihen von Transfervolumina (9, 10) und zugehörigen Zu- und Ableitöffnungen aufweist.

6. Rotationsverdünner nach einem oder mehreren der Ansprüche 1 bis 5, **dadurch gekennzeichnet, dass** das drehbare Rotationselement (4) und/oder die Zu- und Ableitungskanäle zu bzw. von den Zu- und Ableitöffnungen (11 - 18) mittels Heizelementen (37), vorzugsweise internen elektrischen Heizpatronen, thermostatisiert sind.

## Claims

1. Rotating disc diluter (1) for fluid flows, with a revolvingly rotatable rotary element (4) which has surface-accessible discrete transfer volumes (9, 10) which along their common path of movement alternately glide over feed and discharge ports (11 - 18) for the undiluted fluid flow on the one hand and for a dilution fluid flow on the other hand, which ports cover at any time several consecutive discrete transfer volumes, wherein the rotary element (4) has at least two rows of transfer volumes (9, 10) on different paths of movement, which associated feed ports (11 - 14) for the undiluted fluid flow and/or for the dilution fluid flow can be separately controlled.

2. Rotating disc diluter according to Claim 1, **characterized in that** the transfer volumes (9, 10) in each row are individually of equal size, and in the individual separate rows are preferably of different size.

3. Rotating disc diluter according to either of Claims 1 or 2, **characterized in that** the number of transfer volumes (9, 10) in the individual rows is different.

4. Rotating disc diluter according to one of Claims 1 to 3, **characterized in that** the volumetric flow of the dilution fluid flow can be adjusted via an upstream mass flow controller (24).

5. Rotating disc diluter according to one or more of Claims 1 to 4, **characterized in that** the rotary element (4) has at least two separately rotatable sub-elements (4', 4"), which are connected in series in the fluid flow direction, with separate rows of transfer volumes (9, 10) and associated feed and discharge ports.

6. Rotating disc diluter according to one or more of Claims 1 to 5, **characterized in that** the rotatable rotary element (4) and/or the feed and discharge passages to or from the feed and discharge ports (11 - 18) are thermostatized by means of heating elements (37), preferably internal electric heating cartridges.

## Revendications

1. Système de dilution à disque rotatif (1) pour flux de fluide, avec un élément rotatif (4) effectuant une rotation circonférentielle et possédant des volumes de transfert (9, 10) discrets qui sont accessibles sur la surface et qui, sur leur course de déplacement commune, passent alternativement sur des ouvertures d'amenée et d'évacuation (11 - 18) du flux de fluide non dilué d'une part et d'un flux de fluide de dilution d'autre part qui recouvrent toujours plusieurs volumes de transfert discrets successifs, dans lequel l'élément rotatif (4) possède au moins deux rangées de volumes de transfert (9, 10) sur des courses de déplacement différentes dont les ouvertures d'amenée correspondantes (11 - 14) sont aptes à être pilotées séparément pour le flux de fluide non dilué et/ou pour le flux de fluide de dilution.

2. Système de dilution à disque rotatif selon la revendication 1, **caractérisé en ce que** les volumes de transfert (9, 10) sont de même taille sur chaque rangée et sont de préférence de taille différente sur les différentes rangées.

3. Système de dilution à disque rotatif selon l'une des revendications 1 ou 2, **caractérisé en ce que** le nombre des volumes de transfert (9, 10) sur les différents rangées est différent.

4. Système de dilution à disque rotatif selon l'une des revendications 1 à 3, **caractérisé en ce que** le flux volumique du flux de fluide de dilution est réglable à l'aide d'un régulateur de flux massique (24) monté en amont.

5. Système de dilution à disque rotatif selon l'une ou plusieurs des revendications 1 à 4, **caractérisé en ce que** l'élément rotatif (4) possède au moins deux éléments individuels (4', 4") qui se succèdent dans la direction du flux de fluide, qui peuvent tourner séparément et qui possèdent des rangées séparées de volumes de transfert (9, 10) et des ouvertures d'amenée et d'évacuation correspondantes.

6. Système de dilution à disque rotatif selon une ou plusieurs des revendications 1 à 5, **caractérisé en ce que** l'élément rotatif (4) et/ou les canaux d'amenée et d'évacuation qui arrivent aux et partent des ouvertures respectivement d'amenée et d'évacuation (11 - 18) sont conditionnés thermiquement à l'aide d'éléments chauffants (37), de préférence des cartouches électriques chauffantes internes.
